# FASCICULE DE BREVET EUROPEEN

(11) **EP 1 570 648 B1**
(45) Date de publication et mention de la délivrance du brevet: **02.09.2015**
(21) Numéro de dépôt: 03777041.9
(22) Date de dépôt: 01.12.2003
(51) Int. Cl.: H04L 9/08, H04L 9/32, H04N 21/235, H04N 21/262, H04N 21/6334, H04N 21/81, H04N 7/16

(54) **MÉTHODE DE SÉCURISATION DES MISES À JOUR DE LOGICIELS**
VERFAHREN ZUR SICHERUNG VON SOFTWARE-UPGRADES
METHOD OF SECURING SOFTWARE UPDATES

(30) Priorité: 03.12.2002 CH 204302
(43) Date de publication de la demande: 07.09.2005
(73) Titulaire: Nagravision SA, 1033 Cheseaux-sur-Lausanne (CH)
(72) Inventeur: SASSELLI, Marco, CH-1803 Chardonne (CH); PICAN, Nicolas, CH-1003 Lausanne (CH)
(74) Mandataire: Wenger, Joel-Théophile
(86) Numéro de dépôt international: PCT/IB2003/005655
(87) Numéro de publication internationale: WO 2004/051983

(56) Documents cités:
- WO-A-01/35670
- WO-A-98/43431
- WO-A1-00/56009
- US-A- 5 901 225
- US-A1- 2002 029 347
- SCHNEIER B ED - SCHNEIER B: "APPLIED CRYPTOGRAPHY", 1 January 1996 (1996-01-01), APPLIED CRYPTOGRAPHY, PROTOCOLS, ALGORITHMS, AND SOURCE CODE IN C, JOHN WILEY & SONS, INC, NEW YORK, PAGE(S) 15 - 17, XP002939039, ISBN: 978-0-471-11709-4

## Description

La présente invention concerne une méthode de sécurisation des mises à jour de logiciels d'exploitation assurant le fonctionnement de systèmes les plus divers. Plus particulièrement, la méthode de l'invention utilise un mécanisme de signature numérique avec une clé privée d'un algorithme d'encryptage asymétrique.

Un système est défini ici comme un appareil ou un ensemble d'appareils dont le fonctionnement dépend d'un ou plusieurs logiciels stockés dans une mémoire non volatile ou un disque dur. Lorsque les fonctionnalités du système doivent être améliorées ou complétées afin de s'adapter aux exigences croissantes de l'utilisateur, il est souvent nécessaire de mettre à jour uniquement le logiciel concerné sans pour autant changer le matériel constituant le système.

La mise à jour d'un logiciel donné s'effectue en général par remplacement de fichiers d'un logiciel déjà installé ou par ajout de nouveaux fichiers venant compléter ceux qui sont stockés. L'ensemble constitue alors une nouvelle version du logiciel préalablement installé dans le système qui bénéficie ainsi des améliorations souhaitées.

De nombreux appareils tels que des ordinateurs et leurs périphériques, des automates de vente, des téléphones fixes et portables, des décodeurs de télévision à péage, etc. sont pilotés par des logiciels adaptés à leur configuration et aux fonctions de composants spécifiques.

Par exemple, dans un décodeur de télévision à péage (Set Top Box), un logiciel d'exploitation gère des périphériques tels qu'un disque dur, un lecteur de cartes à puce, des interfaces de réception de données et des mémoires. Afin d'introduire des changements soit au niveau de la configuration, soit au niveau des fonctionnalités, il est parfois nécessaire de remplacer le logiciel existant ou d'apporter des améliorations à celui déjà installé dans le décodeur. Ce type d'évolution s'effectue au moyen de portions de logiciels que l'on appelle mises à jour ou patchs fournis par le centre de gestion de l'opérateur auquel un certain nombre d'utilisateurs sont abonnés. Ces mises à jour sont fournies régulièrement par le centre de gestion et téléchargées dans les décodeurs de chaque abonné possédant les droits nécessaires.

Le document WO98/43431 décrit une méthode de téléchargement d'applications dans un récepteur/décodeur. Le logiciel de l'application est divisé en modules et le téléchargement des modules est précédé par une recherche d'un module répertoire à une adresse locale déterminée. Les modules sont signés et le module répertoire est signé et encrypté de sorte qu'une seule encryption est appliquée à tous les modules formant l'application. Plusieurs clés publiques d'encryption sont stockées dans une mémoire à lecture seule (ROM) du récepteur/décodeur. Les applications peuvent être ainsi créées par différentes sources sans nécessiter la connaissance de chacune de leurs clés privées. Une signature du répertoire peut être dissimulée à une position variable dans un bloc de données arbitraires dans le module répertoire. Une application à télécharger peut être vérifiée par comparaison avec un bitmap de validation d'application stocké dans le récepteur/décodeur.

Le document WO01/35670 décrit une méthode d'authentification d'informations transmises à un décodeur de télévision à péage. Un objet logiciel et une structure de données séparée contenant des informations d'autorisation sont signées numériquement avec une signature globale couvrant les deux objets. Ces derniers sont transmis séparément au décodeur. Lorsque ces deux objets sont reçus par le décodeur, la signature est vérifiée.

Les utilisateurs d'un décodeur possèdent en général un contrat payant chez un opérateur qui leur garantit un service de maintenance régulier du logiciel installé dans le décodeur. Afin de limiter les abus par copies non autorisées et par introduction de composants logiciels étrangers, il devient indispensable de sécuriser les mises à jour du logiciel du décodeur. Une méthode connue consiste à utiliser une empreinte codée avec une clé d'un algorithme d'encryptage asymétrique du type RSA. Le logiciel de mise à jour est fourni en ligne avec une empreinte obtenue par une fonction de hachage à sens unique (Hash). Cette empreinte constitue une image unique représentant l'ensemble de la mise à jour et il est admis qu'il n'existe pas deux empreintes identiques sur deux mêmes ensembles de données différentes. Cette empreinte est encryptée à l'aide d'une clé privée de l'opérateur associée à un ensemble d'abonnés, ce qui constitue une signature propre à cet ensemble. Le logiciel accompagné de cette signature est chargé dans une mémoire vive RAM (Random Access Memory) du décodeur. Un programme faisant partie du logiciel du décodeur calcule avec la fonction de hachage (Hash) une empreinte du logiciel stocké dans la mémoire RAM. La signature reçue est décryptée avec une clé publique contenue dans le décodeur puis comparée avec l'empreinte du logiciel calculée auparavant. Si la signature décryptée correspond à l'empreinte résultante du hachage, la signature accompagnant la mise à jour stockée dans la mémoire RAM est considérée comme valide. Le logiciel de mise à jour sera installé dans la mémoire non volatile du décodeur (mémoire Flash).

La sécurisation est ainsi réalisée par la vérification de la signature avec une clé publique dans le décodeur correspondant à la clé privée de l'opérateur.

La clé publique résidant dans le décodeur doit être fixe ainsi que le programme qui permet la vérification de la signature. L'authenticité de la signature est assurée du fait que la clé privée dépend de la clé publique du décodeur. La signature ne peut pas être reproduite car la clé privée n'est connue que d'un opérateur déterminé. De plus, une même signature est inutilisable pour plusieurs mises à jour différentes car elle est une fonction d'une mise à jour bien définie. Un logiciel de mise à jour signé et dont le contenu est modifié dans la mémoire RAM donnera une autre empreinte qui ne peut donc pas être validée par la signature décryptée par la clé publique. En effet, l'empreinte résultante après hachage de la mise à jour au niveau du décodeur et différente de celle obtenue après décryptage de la signature.

Cependant, cette méthode de sécurisation comporte un point faible qui est la clé privée de l'opérateur elle-même. En effet, lorsque celle-ci est découverte par un tiers, il peut signer un logiciel quelconque et apporter des modifications abusives au système.

Cette découverte peut se faire sous forme d'itération sur la clé publique que ce tiers aura extraite au décodeur, jusqu'à ce qu'il découvre la bonne paire de clés. La parade consistant à modifier le comportement le logiciel du décodeur pour qu'il refuse les signatures générées avec la clé découverte est insuffisante car le tiers peut contourner ces modifications avec des programmes adéquats.

Le document WO99/49611A décrit une méthode de transmission sécurisée de données entre un premier dispositif et un second dispositif. Chaque dispositif contient une séquence identique de clés d'encryption. Un pointeur indique la même clé dans la séquence du premier et du second dispositif. Le premier dispositif transmet au second dispositif des données encryptées avec la clé désignée par le pointeur. Le second dispositif reçoit ces données et les décrypte avec la clé désignée par le pointeur dans la séquence dudit second dispositif. Après décryption des données, les pointeurs des séquences du premier et du second dispositif sont incrémentés ou se déplacent vers une clé suivante de manière synchronisée afin de préparer chaque dispositif pour une nouvelle transmission de données encryptées.

Le but de la présente invention est de réduire considérablement l'impact de la découverte d'une clé privée par une analyse systématique du fonctionnement du logiciel du décodeur ou d'accroître notablement le temps et les moyens nécessaires au processus utilisé pour sa détermination.

Le but est atteint par une méthode de sécurisation de mise à jour de données selon la revendication 1

Les données d'une mise à jour sont transmises par le centre de gestion sous forme d'un patch et d'un bloc de contrôle comprenant une signature constituée par l'empreinte du patch encryptée avec une clé privée du centre de gestion. Le décodeur stocke ces données dans la mémoire vive RAM en vue de leur traitement. Une clé publique, associée à cette clé privée appelée clé courante, est sélectionnée à partir d'une liste stockée dans une première mémoire non volatile afin de décrypter la signature du patch. En cas de succès de la décryption et de la vérification, une commande est exécutée aboutissant à l'installation du patch dans une seconde mémoire non volatile (Flash) du décodeur. La clé courante ainsi utilisée est désactivée dans la liste ce qui rend la clé suivante disponible pour la prochaine mise à jour.

Lorsque la vérification de la signature et la décryption d'une mise à jour du décodeur est effectuée avec une clé publique de la liste, celle-ci est biffée et devient inutilisable pour de prochaines mises à jour. Donc, à chaque mise à jour, une nouvelle clé est utilisée puis éliminée de la liste. Les clés publiques de la liste doivent être non modifiables tout comme le programme servant à la vérification des Le document WO00/56009 décrit un système de sécurité et une méthode pour sécuriser un accès d'un terminal distant ou d'un ordinateur à un ordinateur hôte en utilisant des mots de passe très longs et/ou une grande base de données de clés d'identification. La méthode de contrôle d'accès à une ressource accessible à partir d'une pluralité d'unités d'utilisateurs comprend des étapes de : génération d'une pluralité d'ensembles de clés uniques longues, création d'une base de données de clés comprenant une compilation de chaque ensemble de clés, stockage de la base de données de clés dans un médium de stockage connecté à un hôte, programmation d'une unité d'utilisateur pour communiquer avec l'hôte et pour transmettre ou recevoir des clés de ou à partir de l'hôte, programmation de l'hôte pour communiquer avec l'unité d'utilisateur et pour transmettre ou recevoir des clés de ou à partir de l'unité d'utilisateur et distribution d'un ou plusieurs ensembles de clés d'utilisateur à un utilisateur autorisé de la ressource, ledit ensemble de clés d'utilisateur étant enregistré dans un médium de stockage associé à l'unité d'utilisateur avant ou après la distribution de l'ensemble de clés d'utilisateur à l'utilisateur autorisé. L'ensemble de clés d'utilisateur est du type « one-time-pad » c'est-à-dire que chaque clé de l'ensemble n'est utilisée qu'une seule fois. Selon une variante, le médium de stockage de l'unité d'utilisateur comprend une mémoire inscriptible dans laquelle les clés utilisées de l'ensemble de clés d'utilisateur sont effacées ou superposées. signatures. La liste n'est modifiable (élimination des clés utilisées) que par le programme de vérification.

La méthode décrite ci-dessus permet de réduire considérablement les possibilités de modifications du décodeur par un tiers ayant découvert une clé privée. Puisqu'une clé n'est utilisable qu'une seule fois, le tiers n'effectuera qu'une seule modification. Par conséquent une modification du comportement du décodeur pour le protéger des effets du piratage devient plus efficace car le tiers, ne disposant plus de clé privée valable, se trouve ainsi devant un appareil inaccessible.

Du fait que les clés privées utilisables sont plus nombreuses, un tiers doit donc attaquer systématiquement toutes les clés pour qu'il ne soit pas bloqué à une mise à jour qui correspond à la clé qu'il a découverte. Il faut savoir que l'évolution du logiciel des décodeurs est rapide et que l'on considère que si une des clés est découverte, les mises à jour suivantes vont refermer les failles de sécurité que le tiers aurait pu introduire. Si ce tiers est capable de bloquer toute mise à jour postérieure, les fonctionnalités du décodeur seront rapidement obsolètes et donc sans grand préjudice pour l'opérateur.

L'utilisation de clés asymétriques est importante dans ce contexte car l'extraction des clés publiques dans un décodeur ne permet pas de fabriquer une mise à jour acceptable puisque cette mise à jour doit être signée par la clé privée de l'opérateur. Il est commun de placer les clés privées dans la partie sécurisée (l'opérateur) et les clés publiques dans la partie dans le domaine public (le décodeur). Néanmoins, il est possible d'inverser ces clés sans nuire au fonctionnement de la présente invention.

Un premier mode de réalisation de l'invention propose l'utilisation de clés publiques prises dans un ordre prédéterminé à partir de la liste. Ainsi, chaque clé de la liste est prise dès que la clé précédente est utilisée.

L'invention sera mieux comprise grâce à la description détaillée qui va suivre et qui se réfère aux figures annexées servant d'exemple nullement limitatif, à savoir:
- La figure 1 représente le déroulement d'une étape de mise à jour d'un décodeur d'une version N à une version N+1.
- La figure 2 montre une mise à jour d'une version N vers une version R

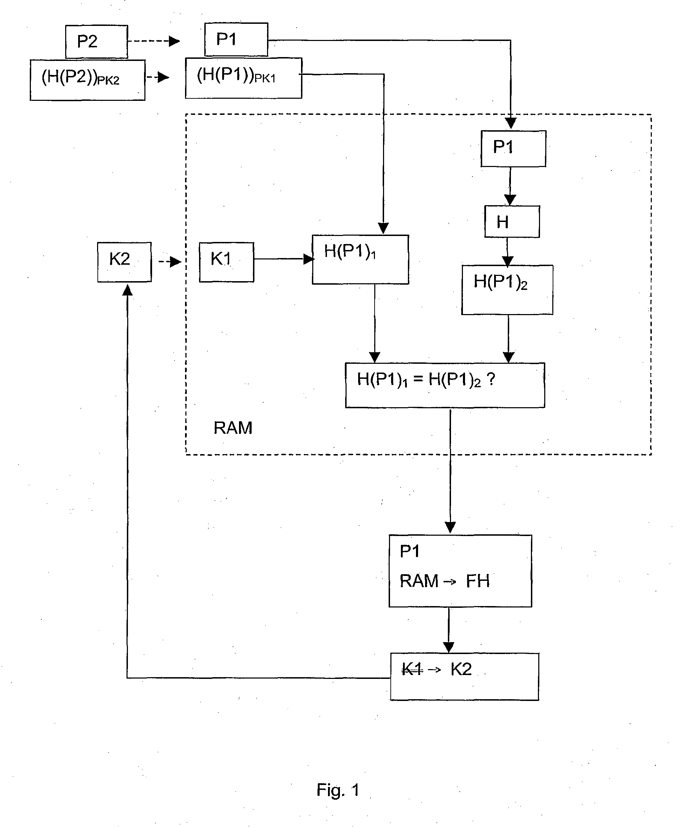

Dans l'exemple illustré par la figure 1, un décodeur de version initiale est mis à jour vers la version 1 avec un patch P1. Ce patch P1 est transmis avec sa signature (H(P1))_{PK1} par le centre de gestion de l'opérateur vers le décodeur. L'étape de mise à jour débute par le chargement du patch P1 dans la mémoire RAM du décodeur.

La signature (H(P1))_{PK1} est obtenue par encryption de l'empreinte H(P1) du patch P1 avec la clé privée PK1 de l'opérateur, opération effectuée dans le centre de gestion. Cette empreinte est calculée par l'opérateur à partir du patch P1 avec une fonction de hachage H à sens unique de type Hash.

Le logiciel du décodeur se charge ensuite de décrypter la signature (H(P1))_{PK1} reçue avec une clé publique K1 afin d'obtenir l'empreinte du patch H(P1)₁. Parallèlement, ce même logiciel calcule l'empreinte H(P1)₂ du patch P1 stockée dans la mémoire RAM. La première empreinte issue de la décryption de la signature H(P1)₁ et la seconde H(P1)₂ résultante du calcul par la fonction de hachage H sont comparées. Si les deux valeurs concordent, le patch P1 est installé dans la mémoire non volatile Flash FH du décodeur réalisant ainsi la mise à jour du logiciel du décodeur. La clé publique K1 utilisée pour décrypter la signature est biffée de la liste.

Une seconde mise à jour de la version 1 vers la version 2 transmise par le centre de gestion sous forme d'un nouveau patch P2 accompagné de sa signature (H(P2))_{PK2} passe par le même procédé de téléchargement et de vérification. Une nouvelle clé publique K2 prise dans la liste sera alors utilisée du côté du décodeur. Toutes les mises à jour suivantes transmises sont vérifiées de la même manière en utilisant chaque fois une nouvelle clé publique prise dans la liste. Les clés des mises à jour précédentes sont neutralisées soit par effacement, soit par un marquage adéquat.

En appliquant ce procédé, une mise à jour d'un logiciel de la version 1 vers une version N s'effectue en N-1 étapes. Le centre de gestion transmettra N-1 patchs avec N-1 signatures correspondantes encryptées chacune par une clé privée propre à chaque version. L'installation des différents patchs entraîne donc la neutralisation de N-1 clés publiques de la liste.

La liste des clés publiques peut être stockée par exemple dans une mémoire non volatile du type EEPROM (Electrically Erasable Programmable Read-Only Memory). Après chaque utilisation d'une clé lors d'une mise à jour, celle-ci est effacée définitivement de l'EEPROM autorisant l'accès à la clé suivante pour la prochaine mise à jour.

Selon un autre mode de réalisation, la liste des clés publiques n'est pas altérée par un effacement ou un marquage d'une clé. Après chaque installation d'une version de logiciel dans la mémoire non volatile Flash, un compteur est incrémenté ou un pointeur se déplace pour indiquer le rang de la clé à sélectionner dans la liste lors de la prochaine mise à jour. Ainsi lors de chaque mise à jour, seule la clé qui servira à décrypter la signature du patch est désignée, les clés précédentes ne pouvant plus être sélectionnées car le compteur ou le pointeur ne peut progresser que dans un seul sens, celui des rangs croissants.

Selon une variante, le patch peut être encrypté par la clé privée de l'opérateur. Une étape supplémentaire de décryption s'ajoute donc au procédé décrit ci-dessus. Le patch P reçu et chargé dans la mémoire RAM peut être décrypté avec la clé publique avant le calcul par la fonction de hachage H de l'empreinte servant à la vérification de la signature. Le calcul de l'empreinte peut également être effectué sur les patchs sous sa forme encryptée.

L'installation de mises à jour par des tiers est rendue plus difficile car chaque changement de version exige la connaissance de la clé courante. Cette dernière change à chaque mise à jour ce qui oblige le tiers à connaître toutes les clés pour suivre les différentes mise à jour.

Le procédé décrit précédemment peut poser un problème lorsque le décodeur est resté hors service le temps où plusieurs mises à jour devaient être effectuées. Le passage d'une ancienne version d'un logiciel à une nouvelle dont le numéro n'est pas consécutif à celui de la précédente version s'effectue séquentiellement en plusieurs étapes successives. Ces dernières utilisant des clés publiques différentes prises dans la liste l'une après l'autre et dans l'ordre. Il est rappelé que le patch en lui-même ne contient pas d'ordre permettant de sélectionner une clé différente de la clé courante. Si tel était le cas, un tiers pourrait utiliser cette commande pour forcer l'utilisation d'une clé qu'il lui serait connue.

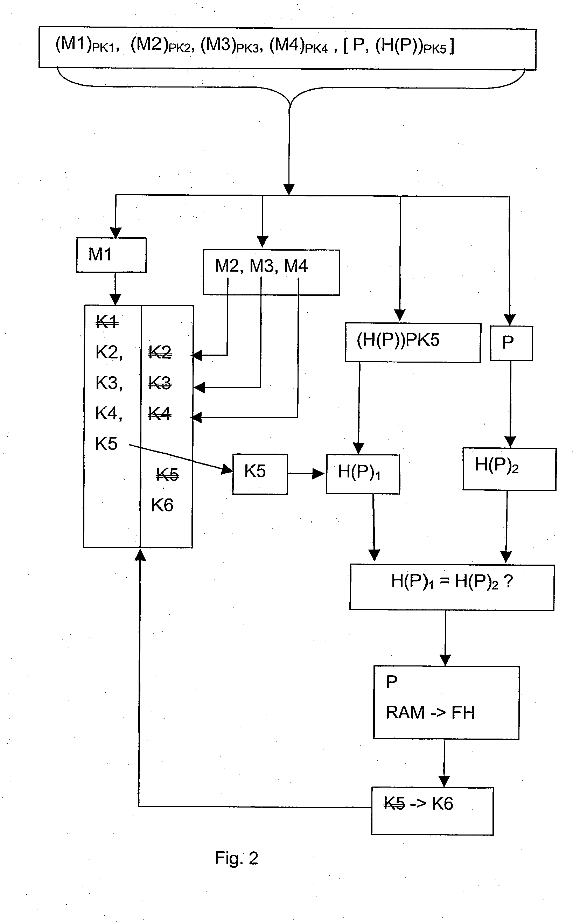

La figure 2 illustre le cas d'un passage d'un logiciel d'une version N à une version R où la différence R-N entre la nouvelle version et la précédente excède l'unité. L'exemple qui suit se rapporte à un cas où N=2 et R=5.

Un décodeur dont le logiciel est de version 2 ne peut pas décrypter directement la signature (H(P))_{PK5} de la nouvelle version 5 car la clé disponible dans la liste des clés publiques est celle de la version immédiatement supérieure, à savoir la clé K3. Pour l'installation de la nouvelle version 5, il doit pouvoir accéder à la clé correspondante à cette version, c'est à dire la clé K5.

La solution consiste à transmettre un flux de données contenant le patch P pour la mise à jour du logiciel du décodeur à la version 5 signé avec la clé PK5 auquel s'ajoute une pluralité de messages M1, M2, M3, M4 encryptés chacun avec une clé privée PK1, PK2, PK3, PK4 tirée de la liste de clés. La mémoire vive RAM stocke ces messages ainsi que le patch P avec sa signature (H(P))_{PK5}. La version du décodeur étant 2, la clé de la mise à jour de la version 1 à 2 est déjà désactivée par la première mise à jour. Le message M1 est alors ignoré car la clé K1 servant à le décrypter n'est plus disponible.

Les messages suivants M2, M3 et M4 servent à désactiver l'une après l'autre les clés publiques K2, K3, et K4 correspondantes à chaque version intermédiaire depuis la version 2 jusqu'à la version 4 précédant la version 5. Ainsi pour installer la version 5 dans la mémoire non volatile Flash, chaque clé publique K2, K3, et K4 de la liste est utilisée puis neutralisée ou biffée. Lors de la décryption du message par la bonne clé, le contenu de ce message est reconnu et provoque l'opération de neutralisation de la clé courante. Si le message n'est pas reconnu, ceci signifie que la clé d'encryption de ce message n'est pas la clé courante.

Après les décryptions successives et réussies des messages M2, M3, M4, la clé K5 nécessaire à la décryption de la signature du patch (H(P))_{PK5} (et du patch P) devient la clé courante. Cette dernière sera aussi biffée de la liste après l'installation du patch et la clé K6 sera présente en tête de liste pour la prochaine mise à jour de la version 5 vers la version 6.

Un tel flux peut donc mettre à jour tout un parc de décodeurs quelle que soit leur version de logiciel grâce aux messages de changement de clé accompagnant le patch. Chaque décodeur dispose d'une clé publique dans la liste capable de décrypter une mise à jour de la version courante après neutralisation des anciennes clés.

Lors d'une mise à jour du logiciel d'un décodeur d'une version N à une version R où la différence R-N devient grande, par exemple supérieure à 10, il devient fastidieux pour un décodeur qui a une version R-1 de décrypter systématiquement tous les messages afin de vérifier les ordres de désactivation. Ce décodeur va appliquer sa clé courante (R-1) à chacun de ces messages pour constater qu'il ne peut pas interpréter son contenu.

Une première solution consiste à introduire en clair dans l'en-tête des messages des index correspondant aux numéros des différentes versions. Cet index sert uniquement à éviter la décryption des messages qui ont été encryptés par une clé différente de la clé courante. Cet index ne sélectionne pas le rang de la clé courante, seul la décryption réussie d'un message avec ladite clé courante provoque l'avance d'un rang dans la liste de clés.

Selon une deuxième solution, l'empreinte du patch de mise à jour est encryptée successivement par toutes les clés privées des mises à jour précédentes. Ce procédé oblige une utilisation de chaque clé publique de la liste, l'une après l'autre, pour décrypter la signature. Dans ce cas d'encryption en chaîne, contrairement au précédent, toutes les clés publiques doivent rester disponibles dans la mémoire EEPROM du décodeur. Par exemple, pour une mise à jour de la version 1 vers la version N, l'empreinte du patch P est encryptée avec une clé privée de la version N. L'ensemble est ensuite encrypté avec la clé privée de la version N-1, puis avec la clé de la version N-2 et ainsi de suite jusqu'à la version 1. La décryption nécessite donc l'utilisation successive des clés publiques K1 à KN-1 correspondantes aux mises à jour de la version 1 à la version N. L'arrêt de ce mécanisme itératif se fait par la reconnaissance d'une marque appropriée dans le résultat de la décryption.

Si l'on souhaite protéger les données de mise à jour, une manière de procéder consiste à utiliser une clé de session SK générée aléatoirement par le centre de gestion par exemple. Pour des raisons opérationnelles de rapidité, cette clé est de type symétrique. Le centre de gestion encrypte le patch avec la clé de session SK et compose un ensemble de données comprenant la clé de session SK et l'empreinte du patch de mise à jour. Cet ensemble est encrypté par la clé privée courante de l'opérateur pour constituer le bloc de contrôle.

Le patch crypté et le bloc de contrôle sont chargés dans la mémoire vive RAM du décodeur. Le bloc est décrypté par la clé publique courante dans la liste ce qui donne l'empreinte du patch et la clé de session SK. Cette dernière est appliquée au patch chargé dans la mémoire RAM permettant sa décryption. Puis l'empreinte du patch est vérifiée et en cas de concordance le patch est installé dans la mémoire non volatile Flash.

La clé de session peut être introduite comme moyen de sécurisation supplémentaire dans l'une ou l'autre des variantes décrites plus haut, par exemple:
- la mise à jour simple d'une version 1 à une version N en plusieurs étapes,
- la mise à jour d'une version N à R à l'aide d'un patch et des messages de désactivation des clés.

Dans un décodeur ayant été mis à jour à de nombreuses reprises, le nombre de clés publiques à disposition diminue tandis que le nombre de clés désactivées augmente en même temps que les mises à jour réussies. Afin de reconstituer une liste de clés pour permettre les futures mises à jour, une nouvelle liste de clés publiques peut être envoyée au décodeur par le centre de gestion. Cette liste peut être incorporée dans le flux de données et accompagnée d'une signature comme pour un patch de mise à jour. Elle est stockée dans la mémoire EEPROM et remplace l'ancienne liste contenant des clés désactivées.

Selon une variante de la méthode de l'invention, le centre de gestion et les décodeurs disposent respectivement d'une liste de clés privées et publiques fixe. A chaque mise à jour, le centre de gestion choisit aléatoirement un ensemble de clés privées parmi celles de la liste et encrypte l'empreinte du patch successivement avec chaque clé de l'ensemble. Le centre compose un bloc de données comprenant l'empreinte encryptée (signature) et une suite de numéros correspondant aux rangs des clés choisies auparavant. Cette suite peut être transmise en clair ou encryptée avec une clé de session. Le décodeur recevant la suite de numéros sélectionne dans la liste des clés publiques, d'après leur rang, les clés nécessaires pour décrypter l'empreinte du patch. La liste ne peut pas comprendre plus d'une fois le même numéro de clé et la longueur de cette liste (nombre de clés utilisées) est connue et non modifiable. Dans cette variante, les listes de clés restent fixes et ne sont pas altérées suite à une installation réussie d'un patch. A chaque mise à jour, une nouvelle combinaison de clés prises dans la liste est utilisée pour la signature du patch. Un tiers devra donc toujours disposer d'un ensemble de clés pour introduire une mise à jour dans un appareil, ce qui nécessite des moyens plus conséquents que pour la détermination d'une seule clé.

Le procédé de sécurisation de mise à jour selon l'invention est indépendant du mode de transmission utilisé entre un fournisseur et un utilisateur. En effet, le procédé peut aussi s'appliquer sur des patchs distribués sur CD-ROM, sur disquette ou sur tout autre support de données numériques.

## Revendications

1. Méthode de sécurisation de mise à jour de données d'une pluralité d'appareils, chaque appareil recevant les mises à jour d'un centre de gestion, ces mises à jour (P_{R}) permettant de passer l'appareil d'une version initiale N à une version finale R, la différence (R-N) entre la version initiale N et la version finale R excédant l'unité, ces mises à jour (P_{R}) étant accompagnées d'un bloc de contrôle comprenant au moins une signature (H(P_{R}))PK_{R} associée à ladite mise à jour, cette signature (H(P_{R}))PK_{R} étant encryptée par une clé (PK_{R}) asymétrique prise dans une liste de clés asymétriques contenue dans le centre de gestion, la liste correspondante des clés asymétriques étant stockée dans l'appareil, **caractérisée par** les étapes suivantes:
a) préparation par le centre de gestion d'une série de messages (M₁...M_{R-1}) chaque message étant encrypté avec une clé asymétrique courante (PK₁...PK_{R-1}) et envoi de la série de messages (M₁...M_{R-1}) encryptés à l'appareil,
b) réception desdits messages (M₁...M_{R-1}) par l'appareil et utilisation de chaque clé courante correspondante (K₁...K_{R-1}) pour la décryption de chaque message (M₁...M_{R-1}),
c) si la décryption du message avec la clé courante est réussie, désactivation de chaque clé courante correspondante (K₁...K_{R-1}) et activation de la clé courante (K_{R}) correspondant à la version (R) de la mise à jour (P_{R}),
d) préparation par le centre de gestion de la mise à jour (P_{R}) et de sa signature (H(P_{R}))PK_{R} encryptée avec la clé asymétrique courante (PK_{R}) et transmission à l'appareil, ladite transmission ne comprenant aucune indication permettant à l'appareil de sélectionner une clé asymétrique dans sa liste de clés asymétriques,
e) réception de la mise à jour (P_{R}) et de sa signature (H(P_{R}))PK_{R} par l'appareil,
f) utilisation de la clé courante correspondante (K_{R}) pour la décryption de la signature (H(P_{R}))PK_{R} pour obtenir une première empreinte H(P_{R})₁ attendue de la mise à jour (P_{R}),
g) vérification de la conformité de la mise à jour (P_{R}) par le calcul d'une seconde empreinte H(P_{R})₂ sur les données de la mise à jour (P_{R}) et comparaison de la première et la seconde empreinte,
h) installation de la mise à jour (P_{R}) reçue si la vérification a été positive et,
i) désactivation de la clé correspondante courante (K_{R}) de l'appareil et activation de la clé suivante (K_{R+1}), ladite clé courante correspondante (K_{R}) devenant inutilisable pour toute utilisation postérieure, ladite désactivation étant effectuée après chaque utilisation d'une clé.

2. Méthode selon la revendication 1, **caractérisée en ce que** la seconde empreinte H(P_{R})₂ est le résultat d'une fonction de hachage, et **en ce que** la vérification de la signature (H(P_{R}))PK_{R} comprend l'étape d'établissement de la seconde empreinte H(P_{R})₂ de la mise à jour (P_{R}) reçue et la comparaison avec la première empreinte H(P_{R})₁ obtenue après décryption de la signature (H(P_{R}))PK_{R} avec la clé courante correspondante (K_{R}).

3. Méthode selon la revendication 1 ou 2, **caractérisée en ce que** le bloc de contrôle comprend de plus une clé de session symétrique (SK) déterminée par le centre de gestion, cette clé (SK) étant utilisée pour encrypter les données de la mise à jour (P_{R}), ladite clé de session (SK) étant encryptée par la clé asymétrique courante (PK_{R}).

4. Méthode selon l'une des revendications 1 à 3, **caractérisée en ce que** la clé asymétrique courante correspondant (K_{R}) est détruite de la liste après son utilisation par l'appareil.

5. Méthode selon l'une des revendications 1 à 4, **caractérisée en ce que** les clés asymétriques de la liste sont utilisées séquentiellement dans un ordre prédéterminé lors de chaque décryption réussie.

6. Méthode selon l'une des revendications 1 à 5, **caractérisée en ce que** la liste des clés asymétriques est stockée dans une mémoire non volatile de l'appareil, une clé correspondant à une décryption réussie est effacée définitivement de la mémoire autorisant l'accès à la clé suivante pour la prochaine utilisation.

7. Méthode selon la revendication 1, **caractérisée en ce que** le nombre (R-1) de messages (M₁...M_{R-1}) correspond au nombre de versions de mise à jour séparant la version initiale N de l'appareil et la version finale R de la mise à jour (P_{R}) moins un.

8. Méthode selon l'une des revendications 1 à 7, **caractérisée en ce que** l'appareil comprend un compteur qui, lors d'une installation d'une mise à jour, est incrémenté lors de chaque vérification positive.

9. Méthode selon l'une des revendications 1 à 7, **caractérisée en ce que** l'appareil comprend un pointeur indiquant le rang de la clé asymétrique courante à sélectionner dans la liste, ce pointeur étant déplacé lors de chaque vérification positive.

10. Méthode selon la revendication 6, **caractérisée en ce qu'**une nouvelle liste de clés publiques est transmise à l'appareil, ladite liste remplace la liste contenue dans la mémoire non volatile contenant des clés désactivées par des mises à jour réussies précédemment.

11. Méthode selon l'une des revendications 1 à 10, **caractérisée en ce que** les appareils consistent en des décodeurs de télévision à péage.

## Patentansprüche

1. Verfahren zur Sicherung der Aktualisierung von Daten einer Vielzahl von Geräten, wobei jeder Apparat die Aktualisierungen von einem Verwaltungszentrum bekommt, so dass dank dieser Aktualisierungen (P_{R}) der Apparat von einer anfänglicher Version N zu einer Endversion R übergeht, wobei der Unterschied (R-N) zwischen der anfänglichen Version N und der Endversion R Eins überschreitet, wobei diese Aktualisierungen (P_{R}) von einem Kontrollblock begleitet werden, der mindestens eine Signatur umfasst, (H(P_{R}))PK_{R}, die mit besagter Aktualisierung verbunden ist, wobei diese Signatur (H(P_{R}))PK_{R} von einem asymmetrischen Schlüssel (PK_{R}) aus einer Liste asymmetrischer Schlüssel im Verwaltungszentrum verschlüsselt ist, wobei die entsprechende Liste der asymmetrischen Schlüssel in dem Apparat gespeichert ist, **gekennzeichnet durch** die folgenden Phasen:
a) Erstellung, **durch** das Verwaltungszentrum, einer Reihe von Nachrichten (M₁...MR₁), wobei jede Nachricht mit einem laufenden asymmetrischen Schlüssel (PK₁...PK_{R-1}) verschlüsselt wird, und Übertragung der Reihe von verschlüsselten Nachrichten (M₁...M_{R-1}) an den Apparat,
b) Empfang der genannten Nachrichten (M₁...MR₋₁) **durch** den Apparat und Benutzung jedes entsprechenden laufenden Schlüssels (K₁...KR₋₁) zur Entschlüsselung jeder Nachricht (M₁...MR₋₁),
c) wenn die Entschlüsselung der Nachricht mit dem laufenden Schlüssel gelungen ist, Deaktivierung jedes entsprechenden laufenden Schlüssels (K₁...KR-₁) und Aktivierung des laufenden Schlüssels (K_{R}), der der Version (R) der Aktualisierung (PR) entspricht,
d) Erstellung, **durch** das Verwaltungszentrum, der Aktualisierung (P_{R}) und ihrer Signatur (H(P_{R}))PK_{R}, die mit dem laufenden asymmetrischen Schlüssel (PK_{R}) verschlüsselt wird, und Übertragung an den Apparat, wobei die Übertragung keine Angabe umfasst, die es dem Apparat ermöglichen würde, einen asymmetrischen Schlüssel aus seiner Liste asymmetrischer Schlüssel auszuwählen,
e) Empfang der Aktualisierung (P_{R}) und ihrer Signatur (H(P_{R}))PK_{R} **durch** den Apparat,
f) Benutzung des entsprechenden laufenden Schlüssels (K_{R}) zur Entschlüsselung der Signatur (H(P_{R}))PK_{R}, um einen ersten erwarteten Fingerabdruck H(P_{R})₁ von der Aktualisierung (P_{R}) zu erhalten,
g) Überprüfung der Konformität der Aktualisierung (P_{R}) **durch** Berechnung eines zweiten Fingerabdruck H(P_{R})₂ aus den Daten der Aktualisierung (P_{R}) und Vergleich des ersten Fingerabdrucks mit dem zweiten,
h) Installierung der empfangenen Aktualisierung (P_{R}), falls die Prüfung positiv ausfiel, und
i) Deaktivierung des entsprechenden laufenden Schlüssels (K_{R}) des Apparats und Aktivierung des folgenden Schlüssels (K_{R+1}), wobei der entsprechende laufende Schlüssel (K_{R}) unbrauchbar für jede spätere Benutzung wird, wobei die Deaktivierung nach jeder Benutzung eines Schlüssels durchgeführt wird.

2. Verfahren nach Anspruch 1, **gekennzeichnet dadurch, dass** der zweite Fingerabdruck H(P_{R})₂ das Ergebnis einer Hashfunktion ist, sowie dadurch, dass die Prüfung der Signatur (H(P_{R}))PK_{R} die Phase der Erstellung des zweiten Fingerabdrucks H(P_{R})₂ der empfangenen Aktualisierung (P_{R}) umfasst und den Vergleich mit dem ersten Fingerabdruck H(P_{R})₁, der nach Entschlüsselung der Signatur (H(P_{R}))PK_{R} mit dem entsprechenden laufenden Schlüssel (K_{R}) erhalten wurde.

3. Verfahren nach Anspruch 1 oder 2, **gekennzeichnet dadurch, dass** der Kontrollblock außerdem einen symmetrischen Sitzungsschlüssel (SK) umfasst, er vom Verwaltungszentrum bestimmt wird, wobei dieser Schlüssel (SK) benutzt wird, um die Daten der Aktualisierung (P_{R}) zu verschlüsseln, wobei der Sitzungsschlüssel (SK) durch den laufenden asymmetrischen Schlüssel (PK_{R}) verschlüsselt ist.

4. Verfahren nach einem der Ansprüche 1 bis 3, **gekennzeichnet dadurch, dass** der entsprechende laufende asymmetrische Schlüssel (K_{R}) nach seiner Benutzung durch den Apparat aus der Liste zerstört wird.

5. Verfahren nach einem der Ansprüche 1 bis 4, **gekennzeichnet dadurch, dass** die asymmetrischen Schlüssel der Liste bei jeder gelungenen Entschlüsselung sequenziell in einer vorgegebenen Reihenfolge benutzt werden.

6. Verfahren nach einem der Ansprüche 1 bis 5, **gekennzeichnet dadurch, dass** die Liste der asymmetrischen Schlüssel in einem nichtflüchtigen Speicher des Apparats gespeichert wird, wobei ein Schlüssel, der einer gelungenen Entschlüsselung entspricht, endgültig aus dem Speicher gelöscht wird, wobei der Zugang zum folgenden Schlüssel für die nächste Benutzung gestattet wird.

7. Verfahren nach Anspruch 1, **gekennzeichnet dadurch, dass** die Zahl (R-1) von Nachrichten (M₁...M_{R-1}) der Zahl von Aktualisierungsversionen entspricht, die die anfängliche Version N des Apparats und die Endversion R der Aktualisierung (P_{R}) minus eins voneinander trennt.

8. Verfahren nach einem der Ansprüche 1 bis 7, **gekennzeichnet dadurch, dass** der Apparat einen Zähler umfasst, der bei Installierung einer Aktualisierung nach jeder positiven Prüfung ansteigt.

9. Verfahren nach einem der Ansprüche 1 bis 7, **gekennzeichnet dadurch, dass** der Apparat einen Zeiger umfasst, der den Rang des aus der Liste auszuwählenden laufenden asymmetrischen Schlüssels angibt, wobei der Zeiger nach jeder positiven Prüfung verschoben wird.

10. Verfahren nach Anspruch 6, **gekennzeichnet dadurch, dass** eine neue Liste öffentlicher Schlüssel an den Apparat übertragen wird, die in dem nichtflüchtigen Speicher die Liste der durch frühere gelungene Aktualisierungen deaktivierten Schlüssel ersetzt.

11. Verfahren nach einem der Ansprüche 1 bis 10, **gekennzeichnet dadurch, dass** die Geräte aus Pay-TV-Decodern bestehen.

## Claims

1. Method for securing updating data from a plurality of devices, each device receiving the updates from a managing center, these updates (P_{R}) allowing to change the device initial version N to a final version R, the difference (R-N) between the initial version N and the final version R exceeding the unit, these updates (P_{R}) being accompanied by a control block comprising a signature (H(P_{R}))PK_{R} associated with said update, this signature (H(P_{R}))PK_{R} being encrypted by a private asymmetrical key (PK_{R}) stored in the managing center, the corresponding list of the asymmetric keys being stored in the device, **characterized by** following steps:
a) preparing by the managing center of series of messages (M₁...M_{R-1}), each message being encrypted with an asymmetric current key (PK₁...PK_{R-1}) and sending the series of messages (M₁...M_{R-1}) encrypted to the device,
b) receiving said messages (M₁...M_{R-1}) by the device and using the current corresponding key (K₁...K_{R-1}) for decrypting each message (M₁...M_{R-1}),
c) if the decryption of the message with the current key is successful, deactivation of the current corresponding key (K₁...K_{R-1}) and activating of the current key (K_{R}) corresponding to the version (R) of the update (P_{R}),
d) preparing by the managing center of the update (P_{R}) and of its signature (H(P_{R}))PK_{R} encrypted with the current asymmetric key (PK_{R}) and transmitting to the device, said transmission does not comprise indication allowing to the device to select one asymmetric key in its list of asymmetric keys,
e) receiving the update (P_{R}) and the signature (H(P_{R}))PK_{R} by the device,
f) using the current corresponding key (K_{R}) for the decryption of the signature (H(P_{R}))PK_{R} to obtain a first digest H(P_{R})₁ expected of the update (P_{R}),
g) verifying the conformity of the update (P_{R}) by the calculation of a second digest H(P_{R})₂ on the update (P_{R}) and comparing the first and the second digest,
h) deactivation of the corresponding current key (K_{R}) of the device and activation of the next key (K_{R+1}), said corresponding current key (K_{R}) being unavailable for all future use, said deactivation being performed after each use of a key.

2. Method according to claim 1, **characterized in that** the second digest H(P_{R})₂ is the result of a hash function, and **in that** the verification of the signature (H(P_{R}))PK_{R} comprises the step of establishing the second digest H(P_{R})₂ of the received update (PR) and the comparison with the first digest H(P_{R})₁ obtained by the decryption of the signature (H(P_{R}))PK_{R} with the corresponding current key (K_{R}).

3. Method according to claim 1 or 2, **characterized in that** the control block includes a symmetrical session key (SK) determined by the managing center, this key being used to encrypt the update (P_{R}), the said session key (Sk) being encrypted by the current asymmetric key (PK_{R}).

4. Method according to one of the claims 1 to 3, **characterized in that** the corresponding current asymmetric key (Kr) is destroyed of the list after utilization by the device.

5. Method according to one of the claims 1 to 4, **characterized in that** the asymmetric keys of the list are used sequentially in a predetermined order during every successful decryption

6. Method according to one of the claims 1 to 5, **characterized in that** the list of the asymmetric list is stored in a non-volatile memory of the device, a key corresponding to a successful decryption is definitely deleted of the memory authorizing the access to the next key for the next utilization.

7. Method according to claim 1, **characterized in that** the number (R-1) of messages (M₁..._{MR-1}) corresponds to the number of updating versions separating the initial version N of the device and the final version R of the update (Pr) minus one.

8. Method according to one of the claims 1 to 7, **characterized in that** the device contains a counter who during the installation of an update is incremented during each positive verification.

9. Method according to one of the claims 1 to 7, **characterized in that** the device contains a pointer indicating the place the asymmetric current key to select in the list, this pointer being moved by each positive verification.

10. Method according to claims 6, **characterized in that** a new list of public keys is transmitted to the device, said list replaces the list contained in the non-volatile memory containing deactivated keys by previous successful updates.

11. Method according to claims 1 to 10, **characterized in that** the devices consist in pay TV decoder.
